# NEUE EUROPÄISCHE PATENTSCHRIFT

(11) **EP 1 751 504 B2**
(45) Veröffentlichungstag und Bekanntmachung des Hinweises auf die Entscheidung über den Einspruch: **26.02.2020**
(45) Hinweis auf die Patenterteilung: 23.08.2017
(21) Anmeldenummer: 05749619.2
(22) Anmeldetag: 06.06.2005
(51) Int. Cl.: G01F 3/10, G01F 3/06

(54) **DURCHFLUSSMENGENFÜHLER UND VERFAHREN ZUR MESSUNG DES VOLUMENS UND/ODER DER DURCHFLUSSGESCHWINDIGKEIT EINES MEDIUMS**
FLOW SENSOR AND METHOD FOR MEASURING THE VOLUME AND/OR FLOW SPEED OF MEDIUM
CAPTEUR DE DEBIT ET PROCEDE POUR MESURER LE VOLUME ET/OU LA VITESSE D'ECOULEMENT D'UN MILIEU

(30) Priorität: 04.06.2004 DE 102004027387
(43) Veröffentlichungstag der Anmeldung: 14.02.2007
(73) Patentinhaber: VSE VOLUMENTECHNIK GmbH, 58809 Neuenrade (DE)
(72) Erfinder: ERTLER, Werner, 58809 Neuenrade (DE)
(74) Vertreter: Einsel, Martin
(86) Internationale Anmeldenummer: PCT/EP2005/006067
(87) Internationale Veröffentlichungsnummer: WO 2005/119185

(56) Entgegenhaltungen:
- EP-A2- 0 828 142
- DE-A1- 10 053 456
- DE-A1- 10 250 319
- DE-A1- 19 703 243
- DE-C1- 4 040 409
- DE-U1- 9 421 532
- DE-U1- 29 612 946
- JP-A- H0 670 574
- JP-A- H08 285 654
- JP-A- S63 132 116
- US-A- 5 184 519
- US-A- 5 586 045
- US-A1- 2002 035 441
- US-B1- 6 363 795
- US-B1- 6 487 919
- Elmar Schrüfer: "Wirbelfrequenz-durchflussmesser" In: "Mess-und automatisierungs-technik", 1 January 1992 (1992-01-01) page 673,
- Anonymous: "Datenblatt iC-NV 6-bit sin/D flash wandler", IC haus IC haus, pages 1-12, XP055498700, [retrieved on 2018-08-09]
- Anonymous: "interpoltoren", IC-Haus IC-Haus, page 1, XP055498871, [retrieved on 2018-08-10]
- Anonymous: "IC-NV 6-BIT SIN/d FLASH CONVERTER", IC Haus IC Haus, pages 1-18, XP055498859, [retrieved on 2018-08-10]

## Beschreibung

Die Erfindung betrifft einen Durchflussmengenfühler mit einer Messkammer, in die ein Medium zuführbar und wieder abführbar ist, dessen Volumen und/oder Durchflussgeschwindigkeit gemessen werden soll, mit in der Messkammer angeordneten, frei drehbar gelagerten Messwerkelementen, mit mindestens einem Sensor zur Messung von magnetischen Feldern und/oder Veränderungen von magnetischen Feldern, und mit einer Schaltungseinrichtung, der die Ausgangsignale des oder der Sensoren zugeführt werden.

Die Erfindung betrifft ferner ein Verfahren zur Messung des Volumens und/oder der Durchflussgeschwindigkeit eines Mediums mit einem Durchflussmengenfühler, welcher eine Messkammer mit darin angeordneten, frei drehbar gelagerten Messwerkelementen und mindestens einem Sensor zur Messung von magnetischen Feldern und/oder Veränderungen von magnetischen Feldern aufweist. Durchflussmengenfühler werden auch als Volumensensoren bezeichnet. Diese sind im Regelfall als Verdrängerzähler aufgebaut. Beispiele hierfür sind Zahnradsensoren, Schraubenspindelzähler, Ovalradzähler, Ringkolbenzähler oder auch Messturbinen oder Zahnrad-Dosierpumpen. Sie dienen dazu, ein Volumen, eine Durchflussmenge oder die Geschwindigkeit zu messen, mit der ein Medium, hier also ein Fluid, durch das Messgerät passiert. Die Fluide können Flüssigkeiten, Pasten oder auch Gase sein.

Bei den Durchflussmengenfühlern handelt es sich in der Praxis häufig nicht um Messgeräte im engeren Sinne, da die Auswerteelektronik nicht Teil des Gerätes ist, sondern sich extern befindet. Dennoch wird häufig der Begriff Durchflussmengenmessgerät verwendet und man spricht auch von Messkammern und Messewerkelementen etc. Die Durchflussmengenfühler werden vielfach auch als Volumensensoren, Durchflusssensoren, Durchflussmessgeräte und in anderer Form bezeichnet.

Die Volumensensoren oder Durchflussmengenfühler fühlen lediglich den Durchfluss oder ein durchgeflossenes Volumen ab und geben ein Signal an diese Auswerteeinheit oder Auswerteelektronik ab, aus der diese erst einen Messwert macht. Der Begriff "Durchflussmengenfühler" wird im folgenden verwendet. Eine Verwechselung zu bestimmten Bauelementen in dem Gerät, die Fühler oder Sensoren im engeren Sinne sind, wird durch die Verwendung der vollständigen Bezeichnung vermieden.

Den meisten Durchflussmengenfühlern oder Volumensensoren ist gemeinsam, dass sie die Bewegung eines sich drehenden Zahnrades abtasten. Bei Zahnradsensoren beispielsweise sind zwei miteinander kämmende Zahnräder frei drehbar gelagert. Ein Medium (im Regelfall ein Fluid, etwa eine Flüssigkeit oder ein Gas) wird den beiden Zahnrädern zugeführt und zwar dem Bereich, in dem diese miteinander kämmen. Das Medium gelangt dadurch in die Kammern, die sich wechselseitig in den Zahnlücken der beiden Zahnräder bilden. Das nachströmende Medium führt dazu, dass die in den Kammern des Zahnrades befindlichen Mengen von der Einlass- zur Auslassseite transportiert werden und über die Bewegung der Zähne dann die Zahnräder in Drehung versetzen. Die Drehung der beiden Zahnräder ist dabei gegensinnig. In dem Gehäuse, dass die Zahnräder umgibt, ist ein Magnet angeordnet, der ein Magnetfeld aufbaut. Dieses Magnetfeld wird von den sich drehenden Zahnrädern beeinflusst. Diese Änderungen des Magnetfeldes können durch einen oder mehrere entsprechende Sensoren abgetastet werden.

Dabei führt jeder Zahn des Zahnrades, der unter dem oder den Sensoren vorbeiläuft, zu einem abtastbaren Impuls. Aus der Zahl dieser Impulse kann nun geschlossen werden, um welchen Winkel das Zahnrad gedreht wurde, beziehungsweise wie viele Umdrehungen das Zahnrad insgesamt in einem bestimmten Zeitraum vollführt hat. Aus diesen Angaben kann dann ein Rückschluss auf die Menge des Fluides oder sonstigen Mediums gezogen werden, dass durch den Durchflussmengenfühler geströmt ist, oder aber die Transportmengengeschwindigkeit des Fluides kann bestimmt werden. Natürlich kann regelungstechnisch in Gegenrichtung in einem Regelkreis ein bestimmter Sollwert für die Menge des zu transportierenden Mediums oder aber für die Durchflussgeschwindigkeit vorgegeben werden, die dann der Durchflussmengenfühler zusammen mit einer Pumpe entsprechend einregelt.

Derartige Geräte sind seit längerer Zeit erfolgreich am Markt und beispielsweise schon aus der DE 25 54 466 C3 bekannt. Es besteht insbesondere ein Wunsch nach Durchflussmengenfühlern, die auch kleine Fördermengen des zu fördernden Mediums möglichst präzise messen können, beziehungsweise eine möglichst präzise Angabe über die Fördergeschwindigkeit zulassen. Die kleinste messbare Menge des zu fördernden Mediums besteht aus der Menge, die einer Drehung des Zahnrades um den Winkel entspricht, der zwischen zwei Zähnen des Zahnrades besteht. Dies würde dem Raum zwischen zwei gezählten Impulsen bei einer Drehung des Zahnrades entsprechen. Dieses Volumen legt dann auch die Ungenauigkeit von Messungen bei größeren Mengen fest. Es wird auch als "Zahnlückenvolumen" bezeichnet. Es ist auch eine Angabe für die Baugröße eines Durchflussmengenfühlers.

Ist zum Beispiel eine Menge mit 9 derartigen Impulsen gefördert worden, so kann das Messgerät keine Aussage darüber treffen, welcher Anteil dieses Zahnlückenvolumens oder Minimalvolumens vor dem ersten und nach dem neunten Impuls durch das Messgerät geströmt ist. Der Wert "9 Impulse" steht also für eine geförderte Menge, deren Volumen zwischen etwas mehr als 8 und fast 10 dieser Minimalvolumen beträgt. Bei kleinen Fördermengen oder sehr langsamen Fördergeschwindigkeiten und ebenso bei sich rasch ändernden Fördergeschwindigkeiten ist dies eine ganz erhebliche Messungenauigkeit.

Dieses Problem ist auch schon erkannt worden und beispielsweise in der US-PS 4,641,522 wird dazu vorgeschlagen, den Sensor so anzuordnen, dass die Bewegung beider Zahnräder zur Messung genutzt werden kann. Ein ähnlicher Vorschlag wird in der EP 0 741 279 B1 unterbreitet, die EP 0 642 001 A2 und die US-PS 5,184,519 schlagen sogar vor, einen ganzen Ring von Sensoren kreisförmig anzuordnen, um möglichst viele Messungen vornehmen zu können.

Alle diese Vorschläge haben das Ziel, durch eine Erhöhung der Zahl der Messungen oder der Messmöglichkeiten das zu fördernde Minimalvolumen des interessierenden Mediums zwischen zwei Impulsen zu reduzieren und so die Messgenauigkeit zu verbessern. Nachteil all dieser Anordnungen ist ein erheblicher apparativer Aufwand, der durch die zusätzlichen Sensoren und die dafür erforderlichen Zuleitungen entsteht.

Beachtet werden muss ja zugleich, dass die Messungen unter Umständen und je nach konkreter, aktueller Anforderung auch an relativ heißen, strömenden Fluiden oder Gasen vorgenommen werden müssen, dass ein hoher Aufwand für die Dichtigkeit der Geräte getrieben werden muss, da es auch um giftige, brennbare oder kostspielige Fluide oder Gase gehen kann und dass die Fluide und Gase durchaus auch aggressive Medien sein können. All dies verkompliziert und verteuert entsprechende Apparaturen unter Umständen erheblich.

Mechanisch wird dies ebenso versucht, in dem möglichst kleine Zahnräder verwendet werden. Das hat dann allerdings den Nachteil, dass mit derartigen Messgeräten keine großen Mengen oder rasch fließenden Fluide, speziell Gase, sinnvoll bearbeitet werden können.

Aus der US-PS 5,586,045 ist ein Vorschlag bekannt, bei einem Durchflussmengenfühler vom Zahnradtyp einen magnetischen Sensor anzuordnen, um die inkrementale Bewegung der Zähne des Zahnrades zu verfolgen. Die Sensorsignale werden an eine digitale Datenverarbeitung weitergegeben und dort gespeichert. Die gespeicherten Messwerte werden mit weiteren Messwerten verglichen, um so relative Zahnstellungen zu ermitteln und die Durchflussmenge gestützt auch auf die relativen Zahnstellungen zu berechnen. Hierfür wird eine aufwändige Elektronik für die Datenverarbeitung und den Vergleich diverser entsprechend gespeicherter vorheriger Messungen eingesetzt.

Aufgabe der vorliegenden Erfindung ist es, eine praktikable Lösung für ein Durchflussmengenfühler vorzuschlagen, mit dem die Messgenauigkeit mit einem geringeren apparativen Aufwand verbessert werden kann.

Diese Aufgabe wird gelöst durch einen Durchflussmengenfühler gemäß Anspruch 1, mit einer Messkammer, in die ein Medium zuführbar und wieder abführbar ist, dessen Volumen und/oder Durchflussgeschwindigkeit gemessen werden soll, mit in der Messkammer angeordneten, frei drehbar gelagerten Messwerkelementen, mit mindestens zwei Sensoren zur Messung von magnetischen Feldern und/oder Veränderungen von magnetischen Feldern, die auf dem Umfang des gleichen Messwerkelementes angeordnet zueinander versetzt sind, bei dem die Sensoren jeweils ein Ausgangssignal abgeben, nämlich der eine Sensor ein Sinussignal und der andere Sensor ein Cosinussignal, mit einer Schaltungseinrichtung, der die Ausgangssignale der Sensoren zugeführt werden, wobei aus dem Verhältnis des Sinussignals zum Cosinussignal sich die genaue Position eines einzelnen Zahnes erkennen lässt, wobei die Ausgangssignale periodisch bei jedem Durchlauf eines einzelnen Zahnes und einer zugehörigen Zahnlücke eines der Messwerkelemente zwischen einem Minimalwert und einem Maximalwert schwanken und abhängig von der Stellung des Zahnes relativ zu den Sensoren einen reproduzierbaren Zwischenwert annehmen, und bei dem die Schaltungseinrichtung so aufgebaut ist, dass sie aus den Ausgangssignalen der Sensoren eigene Ausgangssignale bildet, die die Zwischenwerte in abzählbare Werte umsetzen, die repräsentativ für Teilvolumina der zwischen zwei Zähnen geförderten Volumen sind.

Dadurch wird die Aufgabe überraschend gelöst. Während der Stand der Technik noch davon ausging, dass ein Sensor lediglich angeben kann, dass sich gerade ein Zahn unter ihm hinwegbewegt hat, wird erfindungsgemäß das Signal mehr strukturiert und die Struktur wiederum ausgewertet. Es wird also nicht nur ein "Piek" oder digitales Signal beim Passieren des Sensors durch den Zahn abgegeben, sondern ein periodisches zwischen einem Maximal- und einem Minimalwert schwankendes Signal. Hierfür ist ein Sinussignal geeignet, da es sich durch entsprechende Magnetfeldsensoren auch praktisch darstellen lässt und eine besonders präzise und gleichzeitig einfache Anwendung ermöglicht.

Es ist für die Erfindung sehr vorteilhaft, dass nicht nur ein Sensor, sondern mindestens zwei Sensoren eingesetzt werden. Besonders bewährt hat es sich, wenn die mindestens zwei Sensoren auf einem Messwerkelement, insbesondere also dem gleichen Zahnrad, eingesetzt werden. Die Anordnung von mindestens zwei Sensoren auf einem Zahnrad hat unter anderem den Vorteil, dass bei der Drehrichtungsumkehr der Zahnräder ein Miteingehen des Spiels der Zahnräder zueinander in die Signalaufnahme vermieden wird. Diese messen vorzugsweise in einem Abstand voneinander die Bewegung des gleichen Messwerkelementes, also des gleichen Zahnrades. Dieser Abstand ist so gewählt, dass der eine Sensor gerade eine Sinusschwingung abgibt, während der andere eine Kosinusschwingung produziert, wenn sich das gleiche Zahnrad dreht. Wird dabei der gleiche Zahn abgetastet, entspricht dies also einer Versetzung der beiden Sensoren zueinander um 90° der Schwingung (elektrisch gesehen), was gleichbedeutend zu einer relativen Versetzung um ein Viertel einer Zahnteilung ist.

Es wäre aber auch möglich, zwei benachbarte oder auch zwei weiter voneinander entfernte Zähne abzutasten, da die Zahnräder mit symmetrisch und regelmäßig verteilten Zähnen ausgerüstet sind und daher die Bewegung eines Zahnes stets synchron mit der der anderen Zähne auf dem gleichen Zahnrad erfolgt. Hier können für die Anordnung also konkrete bauliche Anforderungen in vollem Umfange berücksichtigt werden.

Natürlich ist es dabei bevorzugt, wenn die beiden Sensoren bei identischer Stellung zu einem Zahn ein identisches Ausgangssignal abgeben würden. Dies wäre in dem vorgenannten Beispiel eines Sinus- und eines Kosinussignals bei einem Versatz um 90° der Fall. Aus derartigen Signalen lässt sich nämlich automatisch ohne Berücksichtigung der Steigung der Signale sofort und eindeutig die Stellung der Zähne berücksichtigen, es entsteht also eine Feineinteilung. Nimmt man die Stellung oder andere Kombinationen der beiden Sensormesswerte hinzu, so lässt sich die exakte Zahnposition und auch die Drehrichtung des betreffenden Messwerkelementes beziehungsweise Zahnrades und damit die Durchflussrichtung des Mediums noch definierter feststellen.

So lassen sich beispielsweise auch die beiden Sinussignale beziehungsweise Kosinussignale entsprechend dem Additionstheorem summieren und das Ergebnis dann Komparatoren zuführen. Daraus ergibt sich eine besonders hohe Auflösung. Das Verfahren in dieser Ausführungsform führt zu einer sehr hohen Wandlerfrequenz und entsprechend der Vielzahl der verwendeten Komparatoren zu einer hohen Auflösung.

Da die Auswertung durch die Summierung gut erkennbare Signale liefert, ist die Zuordnung zu einer Winkelposition der Zähne sehr genau bestimmbar.

Daraus ergibt sich auch, dass es von besonderem Vorteil ist, wenn die Sinussignale beziehungsweise Kosinussignale reproduzierbar sind und den gleichen Spannungspegel Uₛₛ haben. Dadurch wird eine Interpolation besonders gut möglich.

Besonders vorteilhaft ist es daher, wenn die Sinussignale beziehungsweise Kosinussignale ihren sinusförmigen Verlauf sehr korrekt aufweisen. Je genauer der Verlauf einer mathematischen Sinuskurve entspricht, desto präziser lässt sich die Winkelposition des Zahnes erkennen.

Von besonderem Vorteil ist es dabei, wenn der sinusförmige Verlauf auch nicht von der Temperatur oder den aktuellen Durchflusszuständen beeinflusst werden kann.

Im Stand der Technik war dies nicht möglich. Jede Feldplatte bei Differenzialfühlern erzeugte Spannungen von unterschiedlicher Höhe und die erzeugten Signale ließen sich nicht auf einem gleichen Spannungspegel halten. Darüber hinaus hatten sie keinen in dem gewünschten Sinne sinusförmigen Verlauf.

Dabei haben sich Sensoren in Tests besonders bewährt, die den Riesenmagnetowiderstand einsetzen. In anderem Zusammenhang ist bereits untersucht worden, dass mit Sensoren, die den Effekt des Riesenmagnetowiderstandes einsetzen, genauere Auflösungen von Positionen möglich sind. So schlägt die DE 296 12 946 U1 ein ferromagnetisches Geberteil mit einem Zahnrad vor, bei dem ein GMR-Sensor, das ist ein Sensor, der den Riesenmagnetowiderstand einsetzt, stirnseitig vor einem Zahnrad angeordnet ist. Zumindest theoretisch soll nach dieser Druckschrift dann auch eine Sensorposition relativ zu einem Zahn oder einer Lücke erkennbar sein.

In ähnlicher Form deutet diese Möglichkeit das "GMR Sensors Data Book" der NVE Corporation, Eden Präirie, Minnesota, USA, vom April 2003 an. Trotz der interessanten Eigenschaften von GMR-Sensoren ist eine Realisierung bei Durchflussmessfühlern noch nicht in Betracht gezogen worden. Die Anforderungen bei Durchflussmengenfühlern sind ganz andere als die bei üblichen Zahnradgebern. Eine Anordnung radial außerhalb des Zahnrades, also stirnseitig gegenüber einem Zahn, ist schon aus Platzgründen nicht machbar, zumal auch im Regelfall zwei Zahnräder miteinander kämmen müssen. Die Drücke im Bereich der Messkammer können bei 60 MPa bis 80 MPa (600 Bar bis 800 Bar) liegen. Die zu messenden Fluide sind unter Umständen aggressive und/oder elektrische leitfähige Flüssigkeiten oder auch Fluide mit stark wechselhaften und darüber hinaus auch sehr hohen oder sehr tiefen Temperaturen. Fachleute auf dem Gebiet der Durchflussmessfühler werden daher stets zu möglichst unempfindlichen, als sicher und zuverlässig geltenden Sensoren greifen. Eine höhere Auflösung wird daher stets wie bereits oben erwähnt durch das Anordnen von möglichst vielen, bekannten und geschickt angeordneten Sensoren realisiert, deren Messwerte miteinander verglichen oder ineinander verschachtelt werden, um aus den jeweiligen JA-NEIN-Daten dann Angaben über die Anzahl der geförderten ganzen Messvolumina zu erhalten.

Mit der erfindungsgemäßen Lösung lässt sich jedoch ohne eine derartige, komplizierte Anordnung von mehreren oder vielen Sensoren eine sehr präzise Messung erhalten. Erfindungsgemäß läuft das Sinussignal also über eine vollständige Sinusschwingung, während ein Zahn bei der Bewegung die Position des vorhergehenden Zahnes einnimmt. Damit ist jeder Wert der Sinusschwingung zusammen mit der entsprechenden Steigung der Sinusschwingung in der Lage, eindeutig anzugeben, wo exakt der Zahn zu einem bestimmten Zeitpunkt sich befindet. Eine Sinusschwingung von 180° entspricht also der Förderung eines halben Zahnlückenvolumens; eine Sinusschwingung von 45° entspricht dem Durchfluss von einem Achtel des Zahnlückenvolumens.

Ferner ist es erfindungsgemäß bevorzugt, wenn als Schaltungseinrichtung ein Vorverstärker eingesetzt wird. Die Verwendung eines Vorverstärkers ist ohnehin sinnvoll, um die von den Sensoren abgegebenen, unter Umständen sehr kleinen Signale in Signale umzusetzen, die von einer Auswertelektronik besser umgesetzt werden können, vor allem dann, wenn die Auswerteelektronik über eine gewisse Strecke von den Sensoren entfernt ist.

Der Vorverstärker beziehungsweise die Schalteinrichtung ist dabei bevorzugt so ausgerüstet, dass sie drei Ausgangssignale abgeben kann. Zwei dieser Ausgangssignale sind dabei zueinander jeweils um eine halbe Impulsbreite versetzt. Das bedeutet, dass die Auswerteelektronik, der dann diese Impulse zugeführt werden, diese exakt zuordnen kann und sehr wenig Störungsanfällig mit einem einfachen Zähler Rückschlüsse auf den ursprünglichen Stand des Zahnrades beziehungsweise Messwerkelementes ziehen kann.

Bevorzugt generiert dabei das dritte Ausgangssignal einen Impuls, wenn ein Zahn um eine volle Zahnteilung relativ zu den Sensoren weiterbewegt ist. Dieses dritte Signal, das auch als Nullsignal bezeichnet werden kann, kann zur Synchronisation oder auch zur groben Messung von Durchfluss oder Volumen verwendet werden.

Bei einem erfindungsgemäßen Verfahren wird die Aufgabe dadurch gelöst, dass die mindestens zwei Sensoren auf dem Umfang des gleichen Messwerkelementes angeordnet zueinander versetzt sind, wobei zwei Sensoren jeweils ein Ausgangssignal abgeben und der Schaltungseinrichtung zuführen, nämlich der eine Sensor ein Sinussginal und der andere Sensor ein Cosinussignal, welche Ausgangssignale periodisch bei jedem Durchlauf eines einzelnen Zahnes und einer Zahnlücke eines der Messwerkelemente zwischen einem Minimalwert und einem Maximalwert schwanken und abhängig von der Stellung des Zahnes relativ zu dem oder den Sensoren einen reproduzierbaren Zwischenwert annehmen, und dass die Schaltungseinrichtung aus den Ausgangssignalen der Sensoren eigene Ausgangssignale bildet, die die Zwischenwerte in abzählbare Werte umsetzen, die repräsentativ für Teilvolumina der zwischen zwei Zähne geförderten Volumen sind.

Dieses Verfahren bildet mit den vorstehend hinsichtlich des Durchflussmengenfühlers genannten Vorteilen eine ausgezeichnete Lösung des Problems.

Praktische Anwendungsfälle für die Erfindung sind beispielsweise auch Wegemessungen an Hydraulikzylindern mit kleinem oder mit großem Durchmesser, das Erstellen von Kennlinien abhängig von dem Druck, der Temperatur oder auch anderen Messgrößen an Pumpen, Hydromotoren, Schwenktrieben und dergleichen.

Die Erfindung ist nicht nur bei Zahnradsensoren, sondern auch bei anderen Durchflussmengenfühlern einsetzbar. Der Begriff "Zahn" in dieser Anmeldung umfasst dementsprechend auch vergleichbare Elemente, beispielsweise die spiralförmig umlaufende Rippe bei einem Schraubenspindelzähler und dergleichen. Im Folgenden werden anhand der Zeichnung einige Ausführungsbeispiele der Erfindung näher erläutert. Es zeigen:
- **Figur 1**: eine perspektivische Schemadarstellung eines erfindungsgemäßen Durchflussmengenfühlers mit schematischer Auswertung;
- **Figur 2**: eine schematische Darstellung, die die Auflösung der physikalischen Größe "Volumen" erläutert;
- **Figur 3**: eine schematische Darstellung, die die Auflösung der physikalischen Größe "Durchflussgeschwindigkeit" näher erläutert;
- **Figur 4**: eine schematische Darstellung, die verschiedene gemessene und ausgewertete Kurven bei einem Ausführungsbeispiel zeigt;
- **Figur 5**: eine schematische Darstellung für das Verhalten eines analogen Messwertes bei verschiedenen Auflösungen;
- **Figur 6**: eine schematische Darstellung über das Verhalten von Messwerten bei sich ändernden Durchflussgeschwindigkeiten;
- **Figur 7**: eine schematische Darstellung einer Messung eines Null-Durchgangs bei Wegeventilen; und
- **Figur 8**: zwei schematische Darstellungen eines Messaufbaus an Wegeventilen.

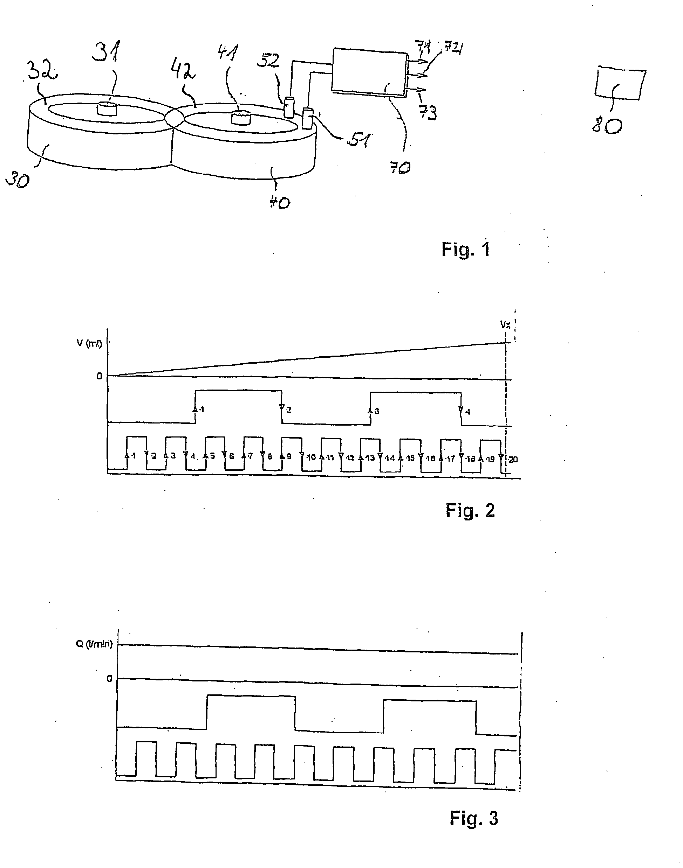

In der **Figur 1** ist das grundsätzliche Prinzip der Auswertung der Daten eines Durchflussmengenfühlers dargestellt. In einem Gehäuse befindet sich eine Messkammer (beides nicht dargestellt). In dieser Messkammer ist ein erstes Messwerkelement 30, insbesondere ein erstes Zahnrad in der Darstellung links zu erkennen. Dieses erste Messwerkelement 30 beziehungsweise erste Zahnrad ist um eine vertikale Achse 31 frei drehbar und weist außen Zähne 32 auf, die hier in der Darstellung nur insgesamt mit ihrer Einhüllkurve wiedergegeben sind.

Dieses erste Messwerkelement 30 kämmt mit einem weitgehend identisch aufgebauten zweiten Messwerkelement 40, also insbesondere einem zweiten Zahnrad. Dieses ist um eine Achse 41 frei drehbar, die parallel zur Achse 31 steht. Das zweite Zahnrad beziehungsweise zweite Messwerkelement 40 weist Zähne 42 auf, von denen hier ebenfalls nur eine Hüllkurve dargestellt ist.

Die Zähne 32 und 42 der beiden Messwerkelemente 30 und 40 kämmen in dem mittleren Bereich zwischen den beiden Zahnrädern beziehungsweise Messwerkelementen miteinander. Dadurch drehen sich die beiden Messwerkelemente 30, 40 gegensinnig.

Wird ein Medium, insbesondere also ein Fluid in den Bereich vor oder hinter den miteinander kämmenden Zähnen 32, 42 gegeben, so versetzt es die beiden Zahnräder beziehungsweise Messwerkelemente 30, 40 in die eben erwähnte gegensinnige Drehung und strömt auf der anderen Seite aus dem kämmenden Bereich wieder heraus. Zufuhr und Abfuhr in die Messkammer sind hier zur Verdeutlichung weggelassen. Das Medium beziehungsweise Fluid F kann nicht an den beiden Messwerkelementen 30, 40 vorbeiströmen, ohne in dem kämmenden Bereich in die von den Zahnlücken zwischen den miteinander kämmenden Zähnen 32, 42 gebildeten Kammern hineinzugelangen, durch Verdrängung die Zähne 32, 42 in Durchflussrichtung zu bewegen und damit die Drehung zu veranlassen. Da das Volumen aus den miteinander kämmenden Zähnen durch die Abmessungen der Zähne und Zahnlücken und der Messwerkelemente genau vorgegeben ist und verdrängt wird, kann aus der Zahl der Drehungen der beiden Zahnräder theoretisch genau abgelesen werden, welches Volumen beziehungsweise welcher Volumenstrom durch den kämmenden Bereich verdrängt wird.

Der kämmende Bereich zwischen den beiden Messwerkelementen beziehungsweise Zahnrädern bildet für das Medium immer eine Sperre. Das Volumen des Mediums wird von der Einlass- zur Auslassseite im Außenbereich der Zahnräder transportiert. Im kämmenden Bereich auf der Auslassseite wird dieses Volumen verdrängt und somit wieder ausgegeben (Verdrängerprinzip).

In dem Gehäuse um die Messkammer sind zwei Sensoren 51, 52 angeordnet. Da die Messkammer und das Gehäuse in der Darstellung weggelassen sind, sieht man die beiden Sensoren 51, 52 unmittelbar oberhalb des zweiten Messwerkelementes 40, genauer ausgedrückt oberhalb der Zähne 42 des zweiten Messwerkelementes 40. Die-Sensoren 51, 52 drehen selbstverständlich nicht mit dem Messwerkelement 40, sondern sind fest in der Wandung der Messkammer angeordnet.

Die beiden Sensoren 51 und 52 weisen voneinander einen Abstand von 90° auf. Diese 90° sind nicht geometrisch im Hinblick auf das Zahnrad beziehungsweise zweite Messwerkelement 40 zu verstehen, sondern beziehen sich auf die Bewegung eines einzelnen Zahnes 42 unter ihnen hinweg. Es wird nämlich ein Magnetfeld in diesem Bereich aufgebaut, wobei das Magnetfeld durch die sich hindurchbewegenden Zähne 42 verändert wird. Die Zähne und das gesamte Messwerkelement 40 sind zu diesem Zweck ferromagnetisch aufgebaut.

Da auch die einzelnen Zähne 42 zueinander identisch sind, ergibt sich eine Sinuskurve, wenn ein einzelner Zahn unter einem der beiden Sensoren 51, 52 hinwegläuft, bis der nachlaufende Zahn wieder in exakt der Position seines Vorgängers steht und das Magnetfeld damit seine ursprüngliche Form wieder angenommen hat.

Der zweite Sensor ist jetzt also um 90° bezogen auf diese Änderung versetzt. Das bedeutet, er ist um ein Viertel desjenigen Winkels gegenüber dem ersten Sensor 51 versetzt, der auf einen konkreten Zahn entfällt. Würde als Beispiel etwa ein Zahnrad mit 12 Zähnen verwendet, so würden auf jeden dieser Zähne 30° des Umfanges des Messwerkelementes 40 entfallen (12 x 30° = 360°). In diesem Fall wären die beiden Sensoren 51 und 52 voneinander auf dem Umfang des zweiten Messwerkelementes 40 um ein Viertel dieses Winkels entfernt, also um 7,5°.

Da die Anordnung der Zähne 42 im zweiten Messwerkelement 40 symmetrisch ist, könnte auch ein Winkelabstand von 37,5° zwischen den beiden Sensoren 51 und 52 bestehen, da auch dann aufgrund der periodischen Eigenschaften ein Winkelversatz um 450°, also gleichbedeutend mit 90° relativ zu einem einzelnen Zahn bestehen würde.

Die beiden Sensoren 51 und 52 geben ihre Ausgangssignale an einen Vorverstärker 70. Dieser Vorverstärker generiert aus den ihm zugeführten Signalen drei Ausgangssignale 71, 72 und 73, die noch im Folgenden näher erörtert werden. Diese Ausgangssignale 71, 72 und 73 werden dann einer externen Elektronik 80 zur Weiterverarbeitung zugeführt.

Die beiden um 90° zueinander versetzten Sensoren 51 und 52 erzeugen aufgrund der Periodizität der durch die Magnetfeldänderungen verursachten Magnetfeldschwankungen ein Sinussignal und ein Kosinussignal. Der Vorverstärker 70 kann nun aus dem Sinus- und dem Kosinussignal digitale Signale 71 und 72 auf zwei Kanälen erzeugen. Dabei befinden sich im Vorverstärker 70 programmierte Interpolationsfaktoren für die Auflösung der zu bestimmenden Messvolumen des Fluides F.

Außerdem wird als drittes Signal 73 ein Nullsignal Z erzeugt. Dieses Nullsignal Z entspricht jeweils einer vollständigen Sinusschwingung, also der Bewegung eines Zahnes soweit, dass der folgende Zahn 42 genau an seine Stelle getreten ist.

Die Signale 71, 72 und 73 werden dann zur Weiterverarbeitung an die externe Auswerteelektronik 80 abgegeben. Die Auswerteelektronik 80 kann dann aus der aktuellen Frequenz der Signale die Durchflussmenge oder auch die Durchflussmengengeschwindigkeit in Zusammenhang mit der Zeit errechnen. Dabei kann mittels eines digitalen Zählers die Auswerteelektronik 80 die einzelnen ihr zugeführten Impulse einfach zählen und aus dem Zählerstand dann das verarbeitete Volumen des interessierenden Fluids berechnen.

Aus dem Verhältnis des Sinussignals zum Kosinussignal lässt sich die genaue Position und damit die exakte Winkelstellung eines einzelnen Zahnes 42 erkennen. Anders als im Stand der Technik ist damit nicht nur die Zahl der Zähne bestimmend, sondern auch Zwischenstellungen. Auch nicht vollständige Bewegungen eines Zahnes auf den nachfolgenden Platz können also zur Auflösung durch eine Art Interpolation herangezogen werden.

Um zu zeigen, welcher Zusammenhang zwischen der Zahl von Impulsen einerseits und der Auflösung der physikalischen Größen besteht, ist in **Figur 2** ein Diagramm für die Auflösung der physikalischen Größe "Volumen" des zu messenden Mediums, insbesondere eines Fluides wiedergegeben.

Dabei ist von links nach rechts die Zeit (t) aufgetragen, von unten nach oben ist das Diagramm in drei Abschnitte geteilt. Das oberste Drittel zeigt das im Laufe der Zeit transportierte Volumen V in Milliliter (m1). Das mittlere Drittel zeigt das Verhalten bei einer nur geringen Zahl an möglichen Impulsen und das unterste Drittel das Verhalten bei einer hohen Zahl an Impulsen.

Ein Maß für die Auflösung eines Durchflussmengenfühlers ist der sogenannte K-Faktor. Der K-Faktor gibt die Anzahl der Impulse pro transportiertem Liter des zu messenden Mediums an. Je größer die Impulszahl pro Liter des zu messenden Mediums ist, desto höher ist auch die Auflösung. Wird aus dem K-Faktor der Kehrwert gebildet, so erhält man unmittelbar das Messvolumen Vₘ des Durchflussmengenfühlers. Das Messvolumen Vₘ ist also aus dem K-Faktor abgeleitet und bildet genauso wie dieser ein Maß für die Auflösung der physikalischen Größe "Volumen".

Nimmt man beispielsweise das mittlere Drittel und geht dort von einer praktischen Zahl des K-Faktors K_{g} von 250 Impulsen/Liter aus, so erhält man für das Messvolumen V_{mg} noch 0,004 Liter/Impuls entsprechend 4 ml oder 4 cm³/Impuls. Teilmengen dieses Volumens sind nicht mehr feststellbar.

Grundsätzlich gilt das gleiche natürlich auch bei einer hohen Auflösung mit einem K-Faktor Kₕ von 50.000 Impulsen/Liter. Dann aber ist das Messvolumen Vₘₕ als Kehrwert 0,00002 Liter /Impuls entsprechend 0,02 ml/Impuls oder 0,02 cm³/Impuls. Auch hier ließen sich dann kleinere Teilmengen nicht mehr feststellen, dafür wäre aber eine Genauigkeit von immerhin 0,02 cm³/Impuls gegeben.

Wie sich aus der Figur 2 leicht ergibt, kann bei der groben Auflösung aus der Zahl der gemessenen Impulse nicht ausgesagt werden, wo zwischen dem noch festgestellten vierten und dem nicht mehr aufgetretenen fünften Impuls denn genau die durchgeflossene Menge liegt, während in dem unteren Drittel bei der hohen Auflösung eine ähnliche Genauigkeit sehr viel feiner vorliegt und die Ungenauigkeit nur noch darin besteht, ob die durchgeflossene Volumenmenge näher bei dem 20. noch erfolgten oder dem 21. nicht mehr erfolgten Impuls liegt.

Genau betrachtet handelt es sich um die 4. beziehungsweise 5. oder 20. beziehungsweise 21. Flanke der Impulse. Jeder Impuls hat eine ansteigende und eine abfallende Flanke. Dies ändert aber an den relativen Verhältnissen der beiden Beispiele zueinander nichts.

Ähnliches gilt natürlich auch für die Messung des Durchflusses, für die daher in **Figur 3** eine vergleichbare Darstellung gegeben ist. Auch dort ist nach rechts die Zeit (t) aufgetragen, die beiden unteren Drittel zeigen die grobe beziehungsweise die hohe Auflösung bei niedrigen beziehungsweise bei hohen Frequenzen und das oberste Drittel zeigt einen hier als konstant angenommenen Durchfluss.

Bei einem Durchfluss von zum Beispiel Q=1 Liter/Min liefert der Durchflussmengenfühler mit grober Auflösung eine Frequenz von 4,2 Hz (entsprechend Q/V_{mg}), während bei hoher Auflösung eine Frequenz von 833,3 Hz (V/Vₙₕ) entsteht. Ändert sich die Frequenz in beiden Fällen um 0,5 Hz, so entspricht dies bei der groben Auflösung einer Änderung von 11,9 % und bei der hohen Auflösung einer Änderung von 0,0006 %. Das bedeutet, dass sich Durchflussänderungen mit der hohen Auflösung wesentlich genauer messen lassen, als dies bei einer groben Auflösung möglich ist.

Zu berücksichtigen ist bei Figur 3 natürlich, dass im Regelfall der interessierende Durchfluss gerade nicht konstant ist. Es dürfte dem Fachmann unmittelbar klar werden, dass gerade bei einem sich ändernden Durchfluss eine größere Zahl an Informationen beziehungsweise Impulsen dann auch eine sehr viel dynamischere Messung und ein schnelleres Erkennen und Verarbeiten von auftretenden Durchflussänderungen ermöglicht.

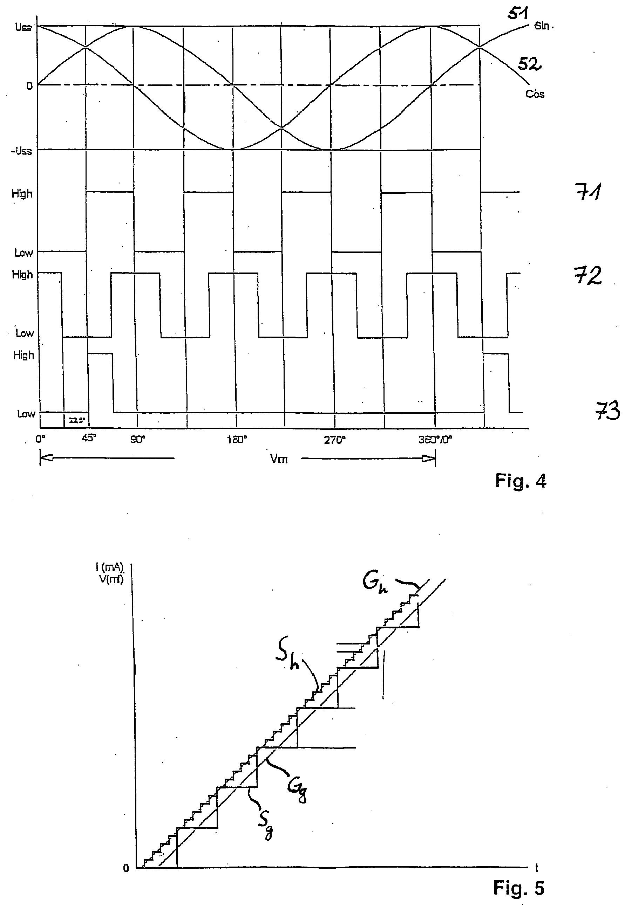

In **Figur 4** ist jetzt ein konkretes Ausführungsbeispiel dafür dargestellt, wie mit einem Durchflussmengenfühler aus Figur 1 mit detaillierter Betrachtung der Sinus- und Kosinusfunktionen eine deutlich verbesserte Auflösung möglich wird. Dabei wird in der Figur 4 von einer Auflösbarkeit um den Faktor 16 gegenüber einer herkömmlichen Konzeption ausgegangen. Die Bewegung eines Zahnes 42 des zweiten Messwerkelementes 40 in die Position des vorhergehenden Zahnes, die bisher dem Transport eines Messvolumens entspricht, ist jetzt auflösbar in 16 einzelne Teilvolumen.

Dabei ist in Figur 4 von links nach rechts das transportierte Volumen des zu messenden Mediums angegeben. Da das Volumen in Litern oder Millilitern oder anderen Bruchteilen von Kubikmetern von der Größe des Durchflussmengenfühlers abhängt, ist als Einheit für die Skala die Bewegung des Zahnes 42 wiedergegeben, wobei für die Bewegung genau eines Zahnes auf den Platz seines Vorgängers ein Wert von 360° angenommen ist. Dies ist durch die Bereichsangabe für das Messvolumen Vₘ, unterhalb der x-Achse nochmals zusätzlich verdeutlicht. Wie schon im Zusammenhang mit Figur 1 erörtert, entspricht dies natürlich nur einem Bruchteil einer Drehung des kompletten Zahnrades, abhängig von der Gesamtzahl der Zähne.

Die Bewegung des Zahnes 42 unter den Sensoren 51 und 52 hindurch generiert wie schon oben erwähnt ein Sinussignal des einen Sensors 51 und ein Kosinussignal des zweiten Sensors 52. Der Vorverstärker 70 ist nun in der Lage, diese beiden Signale miteinander in Beziehung zu setzen. Statt wie früher nur einen Impuls festzustellen, stellt er nun fest, ob das Sinussignal positiv oder negativ ist, ob es steigt oder fällt, ob das Kosinussignal positiv oder negativ ist oder ob dieses steigt oder fällt. Auch das Überschreiten und Unterschreiten bestimmter Werte innerhalb der Sinus- und Kosinusschwankungen oder von ihren Steigungen kann herangezogen werden.

Figur 4 zeigt auch das Ergebnis. Während im obersten Drittel die beiden Ausgangskurven der Sensoren 51 und 52 als Sinus-, beziehungsweise als Kosinusschwingung zwischen den Maximalwerten Uₛₛ und -Uₛₛ dargestellt sind, sieht man darunter die drei Ausgangskurven 71, 72, und 73 des Vorverstärkers 70, nämlich von oben nach unten zunächst digital den Kanal A, dann in ähnlicher Form den Kanal B und schließlich unten das Nullsignal Z entsprechend dem Ausgangssignal 73. Wie man sieht, wird dadurch jetzt eine Feineinteilung auf 22,5° möglich, also auf 1/16 des Messvolumens Vₘ.

Falls gewünscht, ist eine noch feinere Unterteilung möglich, abhängig von den Interpolationsfaktoren, die die Sinus- und Kosinussignale aufschlüsseln.

Der Vorverstärker 70 sollte Endstufen aufweisen, die schnelle Leitungstreiber für die drei Kanäle 71, 72 und 73 aufweisen, beispielsweise mit einer Wellenwiderstandsanpassung für Leitungen mit 75 Ω. Die Endstufen können Push-Pull-EndStufen mit einer Auslegung für eine hohe Treiberleistung von ca. 300 mA bei 24 Volt aufweisen, die aufgrund der hohen Anforderungen bei Übertemperatur kurzschlussfest sein sollten und die auch Ausgänge gegen "Echos" von fehlerhaft angepassten Leitungen besitzen sollten. Eine Datenübertragung mit 24 Volt-Signalen erfolgt in der Regel ohne Leitungsabschluss mit einem Wellenwiderstand. Ein fehlangepasstes Leitungsende kann Reflexionen verursachen, die mehrfach hin- und herlaufen können, wenn auf der Senderseite ebenfalls keine Anpassung vorliegt. Bei schnellen Pulsfolgen wird die Übertragung durch diese Reflexionen möglicherweise gestört.

Bei langen Anschlussleitungen zwischen dem Vorverstärker 70 und der Auswertelektronik 80 sowie bei einer gewünschten hohen Auflösung sollten deshalb Leitungen mit einem Wellenwiderstand von ca. 40 bis 150 Ω verwendet werden und ein entsprechender Abschlusswiderstand an der Auswerteelektronik angeschlossen sein. Durch eine optimale Anpassung der übertragungsleitung und der Abschlusswellenwiderstände können maximale Leitungslängen bis zu 150 bis 200 m erreicht werden.

Bevorzugt kann die Störsicherheit noch durch eine große Ausgangsamplitude und durch eine integrierte Wellenanpassung verbessert werden. Werden die Signale auf der Empfangsseite über Optokoppler geführt, so erhält man zusätzlich noch eine galvanische Trennung zwischen der Sende- und der Empfangsseite und Potentialunterschiede können auf diese Weise ebenfalls vermieden werden.

Die Reflexion rücklaufender Signale wird in der Endstufe des Vorverstärkers durch eine integrierte Wellenwiderstandsanpassung verhindert. Durch diese Anpassung erhöht sich die Störfestigkeit noch zusätzlich.

Mit dem erfindungsgemäßen Durchflussmengenfühler eröffnen sich zahlreiche zusätzliche Möglichkeiten für Anwendungen. Die erzielbare hohe Auflösung und damit die große Zahl an Informationen über den Volumenstrom ergeben eine verbesserte und genauere Auswertung sowohl des Durchflusses selbst als auch des transportierten Volumens.

So wird es nun auch möglich, Medien mit einer relativ hohen Viskosität etwas genauer zu messen. Bei einer hohen Viskosität des Mediums entsteht bei den Durchflussmengenfühlern ein relativ hoher Druckabfall. Um diesen Druckabfall zu reduzieren, wird regelmäßig ein Durchflussmengenfühler größerer Bauart als eigentlich erforderlich, installiert. Dies hat zur Folge, dass der Durchflussmengenfühler nur im unteren Messbereich arbeitet, also gerade wie erörtert besonders ungenaue Informationen liefert. Durch die erfindungsgemäße Konzeption lässt sich die Auflösung jedoch auch in solchen Fällen wesentlich steigern, sodass nun auch Medien mit hoher Viskosität bei ihrem Transport relativ genau beschrieben werden können.

Werden die Durchflussmengenfühler als Dosiervorrichtungen benutzt, so wird auch hier eine viel genauere Dosierung möglich. Abhängig von dem Grad der eingestellten Auflösung werden sehr viel mehr Impulse zählbar, als dies im Stand der Technik möglich war. Durch diese höhere Auflösung lässt sich nun das Volumen wesentlich besser und genauer dosieren und damit Dosiervorgänge und Abfüllungen exakter beenden. Dies gilt ganz besonders dann, wenn das zu dosierende Volumen sehr gering ist.

Die Auswerteelektronik 80 berechnet die Durchflussgeschwindigkeit aus der Frequenz der von dem Vorverstärker 70 abgegebenen Signale. Gebräuchliche Frequenzmessverfahren, die auch bei Durchflussmengenfühlern nach der Erfindung hier eingesetzt werden können, sind etwa die Torzeitmessung und das Pulsbreitenmessverfahren.

Bei der erfindungsgemäß erzielbaren hohen Auflösung liefert der Vorverstärker des Durchflussmengenfühlers eine sehr gut auswertbare relativ hohe Frequenz. Dies ist besonders vorteilhaft, wenn die Auswertung der Frequenz nach dem Torzeitverfahren erfolgt. Selbst bei kurzen Torzeiten und niedrigen Durchflussmengen lässt sich der Durchfluss auch dann noch mit mehreren Nachkommastellen messen. Ein weiterer Vorteil sind die kurzen Messzykluszeiten, die erst durch die hohe Auflösung möglich sind. Hierdurch lässt sich ein sogenannter refresh des Messwertes in kürzeren Zeitabständen erreichen.

Wird die Frequenz nach dem Pulsbreitemessverfahren gemessen, dann lässt sich der Durchfluss aus vielen einzelnen Impulsen bilden. Dies führt zu einer Integration des Messwertes über mehrere Impulse. Durchflussschwankungen werden so gefiltert verarbeitet und der berechnete Messwert unterliegt nicht mehr den Schwankungen.

Bei der erfindungsgemäßen hohen Auflösung können Durchflussänderungen aufgrund der hohen Frequenz sehr viel schneller und genauer ermittelt werden. Die Auswertung erhält somit viel mehr Informationen vom momentanen Zustand des Durchflusses. Dies hat zur Folge, dass die Messung wesentlich dynamischer durchgeführt wird, als dies mit herkömmlichen Geräten möglich ist. Dies wirkt sich ganz besonders bei kleinen Schwankungen und Durchflussänderungen und bei Messungen im Bereich mit niedrigen Durchflussgeschwindigkeiten aus.

Auch digitale Regelungen können mit der abgegebenen hohen Frequenz wesentlich besser und präziser umgehen, da die Auswerteelektronik 80 schon kleine Änderungen der Durchflussgeschwindigkeit sofort erkennen kann und somit Störungen unverzüglich ausregelbar sind.

**Figur 5** zeigt, wie sich die Erfindung bei einer Umwandlung des digitalen Durchflusswertes in einen analogen Messwert nutzen lässt. Nach rechts ist die Zeit (t) und nach oben das Volumen in Milliliter beziehungsweise der Strom in Milliampere aufgetragen. In der Graphik selbst zeigen die großen Stufen S_{g} die durch Umwandlung digitaler Werte bei wenigen Impulsen entstehende Auflösung. Die untere der beiden schräg verlaufenden Geraden G_{g} zeigt dann einen Mittelwert bei einer solchen groben Auflösung.

Die kleinen Stufen Sₕ zeigen, wie sich eine hohe Auflösung auswirkt. Ein Schritt ist dabei in beiden Fällen eine Messwertänderung. Der Mittelwert bei der hohen Auflösung mit der oberen schrägen Geraden Gₕ unterscheidet sich von dem Mittelwert bei der groben Auflösung, sodass tatsächlich ein bei grober Auflösung unrichtiger Wert bei hoher Auflösung korrigiert wird.

Es entsteht also der große Vorteil, dass sich ein analoger Messwert mit einem D/A-Wandler mit großer Bitzahl in sehr viele kleine einzelne Schritte auflösen lässt. Durch die hohe Auflösung lässt sich der analoge Messwert nun sehr viel feiner, genauer und in geringen Abstufungen analog wiedergeben. Des weiteren wird die analoge Ausgabe auch sehr dynamisch, da der Abstand zwischen den einzelnen Schritten nur noch sehr gering ist und damit der analoge Messwert auftretenden Messwertänderungen schnell und dynamisch folgen kann.

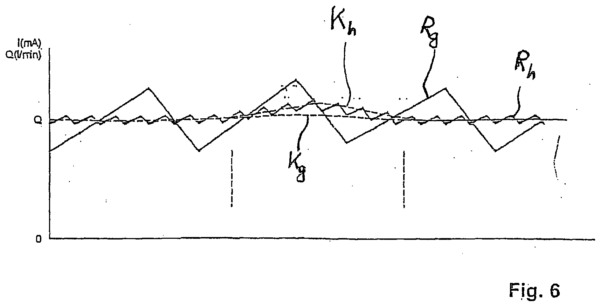

Dieser sehr viel realere Messwert lässt sich bei schwankenden oder sich ändernden Durchflussgeschwindigkeiten noch klarer herausstellen, wie Figur 6 zeigt.

Wird nämlich die Durchflussgeschwindigkeit mit einem F/U-Wandler in einen analogen Messwert umgewandelt, so lässt sich der analoge Wert bei der hohen Auflösung mit kleinerem Rippel Rₕ sehr dynamisch ausgeben, selbst bis hinunter in niedrigere Frequenzbereiche. Durchflussänderungen lassen sich so sehr viel schneller erfassen, sodass man dynamische Vorgänge mit schnellen Yt-Aufzeichnungsgeräten aufzeichnen und registrieren kann. Analoge Regelungen arbeiten viel exakter und genauer, da die Regelung auf eine Durchflussänderung (Frequenzänderung) sehr viel schneller reagieren kann. Hierdurch entstehen keine großen Überschwingungen beim Ausregeln einer Störung mehr, da die Regelung schon frühzeitig auf die Abweichung vom Sollwert reagieren kann.

Bedingt durch die hohe Frequenz lässt sich der F/U-Wandler, der bevorzugt ein Tiefpass ist, nun mit kleineren und schnelleren Filtern ausstatten. Verzögerungen bei der Signalumwandlung werden so minimiert und die Messwertumwandlung erfolgt nur noch mit sehr geringer Zeitverzögerung. Durch die hohe digitale Eingangsfrequenz müssen die Filterstufen das digitale Signal jetzt auch nicht mehr so stark wie im Stand der Technik glätten, da die Signale in kurzen Zeitabständen kommen. Das bedeutet, dass der analoge Messwert jetzt erfindungsgemäß nur noch einen kleinen Rippel Rₕ, aufweist, wie Figur 6 sehr deutlich zeigt. Während die Kurve K_{g} der groben Auflösungen mit den in der Graphik drei großen Rippeln R_{g} die in der Messung auftretende Schwankung kaum richtig erkennt, hat die hohe Auflösung mit dem kleinen Rippel Rₕ eindeutig den in der Graphik zu sehenden Buckel deutlich erkannt, wie man an der Kurve Kₕ sieht.

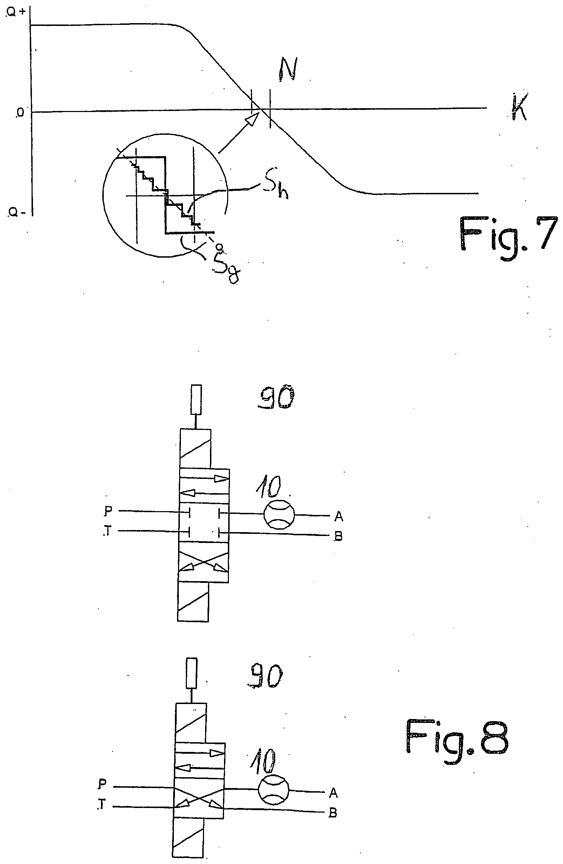

In der **Figur 7** wird eine Möglichkeit für eine weitere Anwendung der erfindungsgemäßen Durchflussmengenfühler dargestellt. Nach rechts ist der Kolbenweg K einen Ventils aufgetragen, nach oben die (positive oder negative) Durchflussmenge. Links sieht man die erste Durchflussrichtung, zu erkennen an einem positiven Volumenstrom Q+, rechts die zweite, entgegengesetzte Durchflussrichtung, zu erkennen an einem negativen Volumenstrom Q-. Wird herkömmlich der Durchfluss eines Mediums an Ventilen gemessen, so tritt bisher häufig das Problem auf, das mit den bisherigen Durchflussmengenfühlern der sehr kleine Volumenstrom des Mediums im Null-Durchgang N nicht mehr genau gemessen werden kann. Dies liegt an den groben Abstufungen, mit denen der niedrige Volumenstrom im Null-Durchgang gemessen wird. Dadurch ist auch die Angabe der Kolbenstellung beim Null-Durchgang ungenau.

Mit erfindungsgemäßen Durchflussmengenfühlern wird aber eine wesentlich höhere, beispielsweise 16-fache Auflösung des Durchflusses möglich.

In der **Figur 8** ist eine dazugehöriger Messaufbau am Beispiel von zwei unterschiedlichen Wegeventilen dargestellt. In der oberen Abbildung handelt es sich um ein 4/3 Wegeventil mit einem Wegaufnehmer 90 und einem Durchflussmengenfühler 10, in der unteren Darstellung um ein 4/2 Wegeventil mit einem Wegaufnehmer 90 und einem Durchflussmengenfühler 10. Der Weg eines Steuerkolbens wird durch den Wegaufnehmer 90 gemessen, während gleichzeitig der jeweils zugehörige Volumenstrom durch den Durchflussmengenfühler 10 gemessen wird. Die beiden Messwerte einander gegenüber gestellt und in der Figur 7 aufgetragen, ergeben dann den dortigen Verlauf. In der in Figur 7 vergrößert herausgestellten Darstellung des Null-Durchgangs kann man leicht erkennen, dass die erfindungsgemäße wesentlich höhere Auflösung der Durchflussmenge im Umkehrschluss nun eine wesentliche präzisere Angabe über den Kolbenweg des Steuerkolbens und damit den Einfluss der Steuerkanten des Ventils im Null-Durchgang erlaubt.

Aus praktischen Gründen sollte beim Aufbau einer Konzeption wie in Figur 8 darauf geachtet werden, das Durchflussmengenfühler so nah wie möglich am Ventil zu installieren. Längere Verbindungsleitungen hätten einen Verzögerungseffekt beim Messen des Volumenstroms zufolge. Es empfiehlt sich ferner, die Verbindungsleitung zwischen dem Ventil und dem Durchflussmengenfühler mit einer starren Rohrverbindung und nicht mit Schläuchen vorzunehmen, damit der Durchflussmengenfühler den Volumenstrom unverzögert messen kann und das Messergebnis zeitgleich zur Wegmessung erfolgt.

### Bezugszeichenliste

- 10: Durchflussmengenfühler

- 30: erstes Messwerkelement, insbesondere erstes Zahnrad
- 31: Achse des ersten Messwerkelementes 30
- 32: Zahn des ersten Messwerkelementes 30

- 40: zweites Messwerkelement, insbesondere zweites Zahnrad
- 41: Achse des zweiten Messwerkelementes 40
- 42: Zahn des zweiten Messwerkelementes 40

- 51: erster Sensor
- 52: zweiter Sensor

- 70: Vorverstärker
- 71: erstes Ausgangssignal
- 72: zweites Ausgangssignal
- 73: drittes Ausgangssignal

- 80: Auswerteeinheit

- 90: Wegaufnehmer

- G_{g}: Gerade mit grober Auflösung
- Gₕ: Gerade mit hoher Auflösung
- K: Kurve mit grober Auflösung
- Kₕ: Kurve mit hoher Auflösung
- R_{g}: Rippel mit großer Auflösung
- Rₕ: Rippel mit hoher Auflösung
- S_{g}: Stufe mit großer Auflösung
- Sₕ: Stufe mit hoher Auflösung

## Patentansprüche

1. Durchflussmengenfühler
mit einer Messkammer, in die ein Medium zuführbar und wieder abführbar ist, dessen Volumen und/oder Durchflussgeschwindigkeit gemessen werden soll,
mit in der Messkammer angeordneten, frei drehbar gelagerten Messwerkelementen (30, 40),
mit mindestens zwei Sensoren (51, 52) zur Messung von magnetischen Feldern und/oder Veränderungen von magnetischen Feldern, die auf dem Umfang des gleichen Messwerkelementes (40) angeordnet zueinander versetzt sind,
bei dem die Sensoren (51, 52) jeweils ein Ausgangssignal abgeben, nämlich der eine Sensor (51) ein Sinussignal und der andere Sensor (52) ein Cosinussignal,
mit einer Schaltungseinrichtung (70), der die Ausgangssignale der Sensoren (51, 52) zugeführt werden,
wobei aus dem Verhältnis des Sinussignals zum Cosinussignal sich die genaue Position eines einzelnen Zahnes (42) erkennen lässt, wobei die Ausgangssignale periodisch bei jedem Durchlauf eines einzelnen Zahnes (42) und einer zugehörigen Zahnlücke eines der Messwerkelemente (40) zwischen einem Minimalwert und einem Maximalwert schwanken und abhängig von der Stellung des Zahnes (42) relativ zu den Sensoren (51, 52) einen reproduzierbaren Zwischenwert annehmen, und
bei dem die Schaltungseinrichtung (70) so aufgebaut ist, dass sie aus den Ausgangssignalen der Sensoren (50, 51) eigene Ausgangssignale (71, 72, 73) bildet, die die Zwischenwerte in abzählbare Werte umsetzen, die repräsentativ für Teilvolumina der zwischen zwei Zähnen (42) geförderten Volumen sind.

2. Durchflussmengenfühler nach Anspruch 1, **dadurch gekennzeichnet, dass** die Schaltungseinrichtung (70) ein Vorverstärker ist.

3. Durchflussmengenfühler nach Anspruch 1 oder 2, **dadurch gekennzeichnet, dass** die zwei Sensoren (51, 52) auf dem Umfang des gleichen Messwerkelementes (40) relativ zueinander um ein Viertel einer Zahnteilung oder um ein Mehrfaches einer Zahnteilung und ein Viertel einer Zahnteilung versetzt sind.

4. Durchflussmengenfühler nach Anspruch 3, **dadurch gekennzeichnet, dass** die beiden Sensoren (51, 52) bei identischer Stellung relativ zu einem Zahn (42) ein identisches Ausgangssignal abgeben, sodass sie aufgrund der relativen Versetzung zueinander um 90° elektrisch gesehen verschobene Signale abgeben.

5. Durchflussmengenfühler nach einem der vorstehenden Ansprüche, **dadurch gekennzeichnet, dass** die Schaltungseinrichtung (70) drei Ausgangssignale (71, 72, 73) abgibt, von denen zwei Ausgangssignale (71, 72) zueinander jeweils um eine halbe Impulsbreite versetzt sind und das dritte Ausgangssignal (73) jeweils einen Impuls generiert, wenn ein Zahn (42) um eine volle Zahnteilung relativ zu den Sensoren (51, 52) weiterbewegt ist.

6. Durchflussmengenfühler nach einem der vorstehenden Ansprüche, **dadurch gekennzeichnet, dass** mindestens einer der Sensoren (51, 52) den Riesenmagnetowiderstand (GMR) nutzt.

7. Verfahren zur Messung des Volumens und/oder der Durchflussgeschwindigkeit eines Mediums mit einem Durchflussmengenfühler, welcher eine Messkammer mit darin angeordneten, frei drehbar gelagerten Messwerkelementen und mindestens zwei Sensoren zur Messung von magnetischen Feldern und/oder Veränderungen von magnetischen Feldern aufweist, wobei die mindestens zwei Sensoren (51, 52) auf dem Umfang des gleichen Messwerkelementes (40) angeordnet zueinander versetzt sind, wobei zwei Sensoren (51, 52) jeweils ein Ausgangssignal abgeben und der Schaltungseinrichtung (70) zuführen, nämlich der eine Sensor (51) ein Sinussginal und der andere Sensor (52) ein Cosinussignal, welche Ausgangssignale periodisch bei jedem Durchlauf eines einzelnen Zahnes (42) und einer Zahnlücke eines der Messwerkelemente (40) zwischen einem Minimalwert und einem Maximalwert schwanken und abhängig von der Stellung des Zahnes (42) relativ zu dem oder den Sensoren (51, 52) einen reproduzierbaren Zwischenwert annehmen, und wobei die Schaltungseinrichtung (70) aus den Ausgangssignalen der Sensoren (50, 51) eigene Ausgangssignale (71, 72, 73) bildet, die die Zwischenwerte in abzählbare Werte umsetzen, die repräsentativ für Teilvolumina der zwischen zwei Zähne (42) geförderten Volumen sind.

## Claims

1. Flow rate sensor
having a measuring chamber, into which a medium, the volume and/or flow rate of which is to be measured, can be fed and then discharged,
having measuring mechanism elements (30, 40) disposed in the measuring chamber and mounted in a freely rotatable manner,
having at least two sensors (51, 52) for measuring magnetic fields and/or variations of magnetic fields, the sensors being arranged displaced relative to one another on the periphery of the same measuring mechanism element (40),
wherein the sensors (51, 52) each produce an output signal, namely the one sensor (51) a sine signal and the other sensor (52) a cosine signal,
having a circuit device (70), to which the output signals of the sensors (51, 52) are supplied,
wherein from the ratio of the sine signal to the cosine signal the precise position of an individual tooth (42) can be detected, wherein the output signals periodically upon each pass of an individual tooth (42) and an associated tooth space of one of the measuring mechanism elements (40) fluctuate between a minimum value and a maximum value and in dependence upon the position of the tooth (42) relative to the sensors (51, 52) assume a reproducible intermediate value, and
wherein the circuit device (70) is so configured that it forms from the output signals of the sensors (50, 51) its own output signals (71, 72, 73), which convert the intermediate values to countable values that are representative of partial volumes of the volumes delivered between two teeth (42).

2. Flow rate sensor according to claim 1, **characterized in that** the circuit device (70) is a pre-amplifier.

3. Flow rate sensor according to claim 1 or 2, **characterized in that** the two sensors (51, 52) are offset relative to one another on the periphery of the same measuring mechanism element (40) by a quarter of a tooth pitch or by a multiple of a tooth pitch and a quarter of a tooth pitch.

4. Flow rate sensor according to claim 3, **characterized in that** the two sensors (51, 52) given an identical position relative to a tooth (42) produce an identical output signal, so that because of the offset relative to one another by 90° from an electrical viewpoint, they produce signals which are displaced.

5. Flow rate sensor according to one of the preceding claims, **characterized in that** the circuit device (70) produces three output signals (71, 72, 73), of which two output signals (71, 72) are offset relative to one another in each case by half a pulse width and the third output signal (73) generates a pulse each time a tooth (42) is moved on by a full tooth pitch relative to the sensors (51, 52).

6. Flow rate sensor according to one of the preceding claims, **characterized in that** at least one of the sensors (51, 52) is a giant magnetoresistance (GMR) sensor.

7. Method of measuring the volume and/or the flow rate of a medium by means of a flow rate sensor, which comprises a measuring chamber having measuring mechanism elements disposed therein and mounted in a freely rotatable manner and having at least two sensors for measuring magnetic fields and/or variations of magnetic fields, wherein the at least two sensors (51, 52) are displaced relative to one another arranged on the periphery of the same measuring mechanism element (40), wherein two sensors (51, 52) each produce and supply to the circuit device (70) an output signal, namely the one sensor (51) a sine signal and the other sensor (52) a cosine signal, which output signals periodically upon each pass of an individual tooth (42) and a tooth space of one of the measuring mechanism elements (40) fluctuate between a minimum value and a maximum value and in dependence upon the position of the tooth (42) relative to the sensor or sensors (51, 52) assume a reproducible intermediate value, and wherein the circuit device (70) forms from the output signals of the sensors (50, 51) its own output signals (71, 72, 73), which convert the intermediate values to countable values, that are representative of partial volumes of the volumes delivered between two teeth (42).

## Revendications

1. Capteur de débit
avec une chambre de mesure, dans laquelle un milieu peut être amené et à nouveau évacué, dont le volume et/ou la vitesse d'écoulement doit être mesurée,
avec des éléments de système de mesure (30, 40) agencés dans la chambre de mesure, logés librement rotatifs,
avec au moins deux capteurs (51, 52) pour la mesure de champs magnétiques et/ou modifications de champs magnétiques, qui sont décalés l'un par rapport à l'autre agencés sur la circonférence du même élément de système de mesure (40),
dans lequel les capteurs (51, 52) émettent respectivement un signal de sortie, à savoir l'un capteur (51) un signal sinus et l'autre capteur (52) un signal cosinus,
avec un dispositif de commutation (70), auquel les signaux de sortie des capteurs (51, 52) sont amenés,
dans lequel la position exacte d'une dent individuelle (42) se laisse détecter à partir du rapport du signal sinus par rapport au signal cosinus, dans lequel les signaux de sortie fluctuent périodiquement à chaque passage d'une dent individuelle (42) et d'un entredent correspondant d'un des éléments de système de mesure (40) entre une valeur minimum et une valeur maximum et adoptent une valeur intermédiaire reproductible en fonction de la position de la dent (42) par rapport aux capteurs (51, 52), et
dans lequel le dispositif de commutation (70) est construit de sorte qu'il forme des propres signaux de sortie (71, 72, 73) à partir des signaux de sortie des capteurs (50, 51), qui mettent en œuvre les valeurs intermédiaires en valeurs dénombrables, qui sont représentatives de volumes partiels des volumes transportés entre deux dents (42).

2. Capteur de débit selon la revendication 1, **caractérisé en ce que** le dispositif de commutation (70) est un préamplificateur.

3. Capteur de débit selon la revendication 1 ou 2, **caractérisé en ce que** les deux capteurs (51, 52) sont décalés sur la circonférence du même élément de système de mesure (40) l'un par rapport à l'autre d'un quart d'un pas de denture ou d'une pluralité d'un pas de denture et d'un quart d'un pas de denture.

4. Capteur de débit selon la revendication 3, **caractérisé en ce que** les deux capteurs (51, 52) émettent en cas de position identique par rapport à une dent (42) un signal de sortie identique, de sorte qu'ils émettent en raison du décalage relatif l'un par rapport à l'autre des signaux décalés du point de vue électrique d'environ 90°.

5. Capteur de débit selon l'une quelconque des revendications précédentes, **caractérisé en ce que** le dispositif de commutation (70) émet trois signaux de sortie (71, 72, 73), dont deux signaux de sortie (71, 72) sont décalés l'un par rapport à l'autre respectivement d'une demi-largeur d'impulsion et le troisième signal de sortie (73) génère respectivement une impulsion, lorsqu'une dent (42) est déplacée d'un pas de denture complet par rapport aux capteurs (51, 52) .

6. Capteur de débit selon l'une quelconque des revendications précédentes, **caractérisé en ce qu'**au moins un des capteurs (51, 52) utilise une magnétorésistance géante (GMR).

7. Procédé de mesure du volume et/ou de la vitesse d'écoulement d'un milieu avec un capteur de débit, lequel présente une chambre de mesure avec des éléments de système de mesure qui y sont agencés, logés librement rotatifs, et au moins deux capteurs pour la mesure de champs magnétiques et/ou modifications de champs magnétiques, dans lequel les au moins deux capteurs (51, 52) sont décalés l'un par rapport à l'autre agencés sur la circonférence du même élément de système de mesure (40), dans lequel deux capteurs (51, 52) émettent respectivement un signal de sortie et l'amènent au dispositif de commutation (70), à savoir l'un capteur (51) un signal sinus et l'autre capteur (52) un signal cosinus, lesquels signaux de sortie fluctuent périodiquement à chaque passage d'une dent individuelle (42) et d'un entredent d'un des éléments de système de mesure (40) entre une valeur minimum et une valeur maximum et adoptent une valeur intermédiaire reproductible en fonction de la position de la dent (42) par rapport au ou aux capteurs (51, 52), et dans lequel le dispositif de commutation (70) forme des propres signaux de sortie (71, 72, 73) à partir des signaux de sortie des capteurs (50, 51), qui mettent en œuvre les valeurs intermédiaires en valeurs dénombrables, qui sont représentatives de volumes partiels des volumes transportés entre deux dents (42).
